# EUROPEAN PATENT APPLICATION

(11) **EP 1 419 701 A1**
(43) Date of publication of application: **19.05.2004**
(21) Application number: 03388074.1
(22) Date of filing: 12.11.2003
(51) Int. Cl.: A23K 1/14, A23K 1/16

(54) **Natural intestinally active additive for animal feed or drinking water**

(30) Priority: 13.11.2002 DK 200201749
(71) Applicant: NOR-FEED A/S, 2650 Hvidovre (DK)
(72) Inventor: Elgaard, Troels, 2660 Brondby Strand (DK); Berg, Henrik, 2690 Karlslunde (DK)
(74) Representative: Zeuthen-Aagaard, Henrik

(57) **Abstract**

Natural intestinally active additive to be used as a supplement to animal feed or in drinking water for animals and which can be extracted from a plant material originating from grapes. The additive is an advantageous supplement to animal feed in connection with breeding of farm animals and as a replacement of conventional growth-promotors which are in the process of being phased out. In addition, the additive has a stabilising and regenerating effect on fat-soluble vitamins and provitamins.

## Description

### Technical Field

The present invention relates to the use of a plant material originating from grapes in an intestinally active feed additive to be added to the animal feed or to the drinking water for animals.

### Technical Background

It is well-known to use antibiotic or chemotherapeutic substances as so-called "growth-promoters" in connection with breeding of farm animals. During recent years there has been an increasing focus on the problems caused by the widespread use of antibiotics or chemotherapeutics as growth-promoters. More and more pathogenic micro-organisms can develop a resistance to the antibiotics in question which accordingly become less effective. A risk applies of antibiotic residues remaining in meat products with the result that human beings also consume antibiotics, which in turn may have the result that micro-organisms infecting human beings with diseases can develop a resistance. In addition, a risk of consuming antibiotic-resistant micro-organisms together with the meat products applies.

Therefore, a general opinion applies now that a continued use of various antibiotics as growth-promoters will increase the risk of an epidemic among animals and/or human beings which cannot be combated by means of antibiotics. Many human beings have already developed an allergy to specific antibiotics. Furthermore, one of the hitherto used chemotherapeutic growth-promoters has turned out to be carceno-genic as well.

Consequently, the use of the classic growth-promoters in connection with pig production has already been stopped completely in some countries, including Denmark and Sweden, and the use thereof is in the process of being rapidly phased out in several additional countries, also beyond the EEC countries.

In view of the above problems, attempts have been made to develop alternative methods so as to ensure a disease-free breeding of farm animals without the use of antibiotics.

This cessation of the use of conventional growth-promoters in connection with the production of piglets in the weight ratio of 6 to 35 kg has turned out to cause problems in up to 80% of all stocks.

One of the reasons why especially piglets suffer from problems of diarrhoea during this period is the fact that immediately after the weaning they are subjected to an intense change because the sow's milk is replaced by dry fodder from one day to the next day. As a result of this dramatic change of fodder, the intestine must be physiologically adapted which occurs through a very high dividing speed of epithelial cells with the effect that the thickness of the intestinal wall and the intestinal length are increased significantly. In such a stress situation, the pigs easily end up suffering from an E-vitamin deficiency with the result that they become susceptible to intestinal infections. The E-vitamin deficiency is further intensified by the fact that the protected type of E-vitamin always supplied through the fodder is not bioaccessible to the piglets for up to three weeks after the weaning. In theory it is possible to administer E-vitamin through the drinking water, but as such a procedure is not allowed according to the current legislation, the only way of solving this problem is to administer injections to the individual pigs. Such a procedure is both work-intensive and can in some cases also directly cause problems of infections in the occipital muscles of the pigs. Therefore the administration of natural E-vitamin in form of alpha-tocopherol is encumbered with problems in many ways.

Typical symptoms in piglets upon weaning are an increased occurrence of diarrhoea requiring treatment and that the piglets do not flourish, and an increased frequency of infections, especially caused by *E. coli* or *Lawsonia intracellularis,* as well as dysentery and diseases similar to dysentery. These diseases are conventionally treated with antibiotics for a short or a long period, and during recent years such a treatment has caused a significantly increased use of fluoroquinolones in particular, said fluoroquinolones being one of the most important types of antibiotics used for the treatment of human beings.

Furthermore, it is conventional to use high dosages of heavy metals, such as copper and zinc, as part of the treatment strategy. Zinc is used especially for weaned piglets, whereas copper is in particular used for the slightly older pigs. For many years it has been common knowledge that the heavy metals accumulate in Nature.

Therefore, the agriculture is subjected to an increasing pressure for minimizing the use of antibiotics and heavy metals in form of zinc oxide, zinc sulphate and copper sulphate.

In order to economize on the breeding of farm animals, a demand for alternative solutions exists accordingly. Such alternative solutions should be effective to prevent or reduce these infections and diseases in farm animals while not being encumbered with the risk of the classic growth-promoters developing a resistance in the micro-organisms.

Advantageously such solutions may be based on natural active substances or substances identical to natural active substances. Furthermore these substances should have the same or preferably an improved effect on the growth and the utilization of the animal feed of the animals compared to the classic growth-promoters in order to ensure the acceptance of both the farmer and the animal feed industry.

It is a well-known fact that many plants include various functional and/or antibacterial substances, such as saponines, flavonoids, tannins, hydroxycymenes and terpenes, and it is also a well-known fact that such active substances from plant materials can be utilized in drugs. In addition, it has been suggested to use such natural substances as a daily supplement to both animals and human beings. However, in many cases the effects claimed of such active plant components have not been sufficiently verified, and many components are only available in small quantities in the plants in question and can be too cost-intensive and/or too difficult to obtain for a prophylactic daily use as a feed supplement.

In some respects the use of antibiotic growth-promoters has been considered an asset to the environment because the obtained improvement of the utilization of the animal feed has been a direct cause of a reduced spreading of nitrogen. During recent years, increasing requirements are presented to a minimizing of the loss of nitrogen within the agriculture, and a vital factor for reducing this loss is an improved utilization of the animal feed, and especially an improved utilization of the protein part of the animal feed.

HU 62770 A discloses an animal feed improving the utilization of the animal feed and the health state of the animals. The animal feed includes residues of grapes and is used in large quantities, viz. 2 to 6%, corresponding to 20 to 60 kg per ton of animal feed. Such quantities have the effect that a continuous adding to the daily animal feed of the animals is unrealistic on a commercial scale due to the limited availability of the grape residue material at an operationally justifiable price. KR 2002011865 A suggests the use of a fermented grape pomace as a feed additive for poultry in order to increase the growth and in order to obtain an increased weight of the eggs during the early egg-laying period. Here too it is suggested to use 2 to 6% in the animal feed, which is an unrealistic and/or uneconomic procedure in connection with a continuous feeding for long periods.

Various methods are also known for extracting health-promoting active substances from grape seeds. Thus WO 97/39632 suggests pulverized, lyophilized grape seeds as pharmaceutical products for human beings and animals, said products including proanthocyanodins which are natural antioxidants and protect against harmful free radicals. EP-A-1 184 453 suggests grape seeds isolated from the remaining grape ingredients as a nutrient supplement and a health-promoting substance. US 6 395 280 suggests proanthocyanidin optionally provided through an extraction of grape seeds and to be used as a substance for reducing a bad smell from organic fertilizer and excretion from farm animals. US 2001/0021398 Al relates also to extracts of proanthocyanodins to be used prophylactically against urogenitial infections in mammals. These methods are based on grape seeds and are all complicated isolating methods whereby the seeds are to be isolated from the remaining grape ingredients so as subsequently to be subjected to further physical and/or chemical treatments, which are cost-intensive and inconsistent with a daily use within the commercial animal breeding.

Finally, WO 99/25209 states that waste products resulting from the production of wine include dietetic fibres having an antioxidant effect. However, WO 99/25209 includes no indications of the quantities for a continuous and financially reasonable use of such waste products for farm animals.

According to Danish patent application No. PA 2001 01962 filed on 28 December 2001 and therefore not yet divulgated, a feed additive is suggested which includes a combination of a tannin-containing component (a), which can be obtained from plants selected from the genera Aesculus, Castanea, Quercus, Juglans, Ceratonia, Quillaja and/or Camellia , and an active component (b), which can be obtained from citrus fruits and grapes.

According to the Danish patent application, the combination of the tannin-containing component (a) and the component (b) is essential for obtaining the desired objects, viz. a sufficient efficiency matching the efficiency of the classic growth-promoters, and an availability and price allowing the commercial use as a feed additive for a daily use.

The efficiency of the suggested combined feed additive was initially demonstrated by means of a dried by-product resulting from the production of citrus juice as component (b). However, it turned out through subsequent tests by means of the alternative component (b), viz. a component obtainable from grapes, that this component is not only efficient in combination with the tannin-containing component (a), but also that this component is so efficient that it fulfils the desired objects when used as the sole active component in a feed additive or as an additive to the drinking water of the animals.

Thus it turned out surprisingly that it is possible to obtain an interesting effect on the growth and utilization of the animal feed of farm animals when the animal feed or optionally the drinking water is admixed a very limited amount of a product originally resulting as a waste product from the production of wine. In particular the moderate amounts necessary for obtaining good results are promising for a healthy breeding of farm animals both with respect to the finance and with respect to the ethics relating to animals.

### Brief Description of the Invention

The present invention relates to the use of a plant material originating from grapes in an intestinally active feed additive to be added to the animal feed or the drinking water for animals, where the feed additive in addition to possible conventional adjuvants or additives includes 50 to 10,000 g of plant material calculated as dry matter per 1,000 kg of animal feed.

The use according to the invention renders it possible to use a feed mixture for farm animals including the feed additive together with a conventional animal feed, where the breeding of farm animals is carried out by feeding the feed mixture to the animals.

Furthermore, the invention relates to the use of the feed additive for stabilising and/or regenerating fat-soluble vitamins and/or provitamins in vivo and in vitro.

Unlike the feed additive suggested in the Danish patent application No. PA 2001 01962, it is according to the present invention possible in the feed additive used to omit the tannin-containing component (a) originating from the above plant genera and suggested in said Danish patent application. Thus it is a product far simpler than hitherto known products, and the product is even based on a waste product having only minor practical use at present, which makes the active component very inexpensive and simplifies the production of the additive.

The plant material based on grapes can in particular be used alone because this material includes a substantial content of tannins in addition to the antibacterial active substance mentioned in the Danish patent application.

In addition, the tannins present in the grape-based waste products turned out to present physical-chemical properties making them superior with respect to protection of vitamin-E and other fat-soluble vitamins and furthermore with respect to their capability of regenerating tocopheryl radicals compared to tannins based on the tannin-containing plants mentioned in the Danish patent application No. DK PA 2001 01962.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed Description of the Invention

The feed additive can be obtained from a waste product resulting from the production of wine, where said waste product can include the total press residue, viz. all matter beyond the grape juice. In the present description and claims, this total press residue is also called the primary press residue. In literature this primary press residue is also termed grape pomace.

The primary press residue resulting from the production of wine is conventionally utilized as raw material for the production of a number of various products. After each step of the process it is possible to obtain a more or less suited press residue product which can form part of the feed additive in a varying quantity.

During the production of red wine, the grape juice is fermented together with the skin and the seeds. After 3 to 7 days, the juice is pressed out, and the primary press residue can be one of several possible raw materials for the active component. In some areas, this primary press residue is used for the production of various types of alcohol, such as Grappa and various acids. An example is production of citric acid through fermentation of grape pomace by means of *Aspergillus niger,* cf. US 4 791 058 (Hang).

The primary press residue can subsequently be further processed. Thus it is technically possible to separate the seeds from the skin in order to extract oil from the seeds. Both the residues from the extraction of oil and the discarded skin are press residue products suitable as raw materials for the present active component.

In some wine areas a tradition has been developed for a further processing of the skin fraction in order to extract natural dyes and the like substances. In connection with most extraction processes, the remaining residues present an increased content of active substances which are interesting according to the invention.

Thus it is a question of three raw materials based on basically different press residues and with a high or low content of active substances, where the waste products resulting from extraction processes are considered to be the most valuable substances.

A preferred press residue product is based on red grapes. These grapes can for instance be of the types Cabernet Sauvignon, Merlot, Syrah, Pinot Noir, Lemberger or Tempranillo.

The press residue product can advantageously result from red grapes used by the production of white wines because the grape residues are removed from the grape juice as soon as it is at all possible after the pressing out of the grape juice. In other words, all the active substances relevant to the natural feed additive are maintained in the press residue product.

Immediately following the pressing out of the juice, the press residue product can be dried to a water content of maximum 8 to 15% by weight, usually to a maximum water content of 10% of water, or optionally down to 8% of water, or it can be preserved, such as by addition of 0 to 30% by weight, preferably 3 to 15% by weight of NaCl, or another salt, and subsequently be stored until a possible later drying. In order to additionally ensure the keeping qualities, 0 to 5% of an acid acceptable in the animal feed, such as citric acid, tartaric acid or lactic acid or a mixture thereof can advantageously be added, said addition simultaneously having a positive influence on the effect of the product.

The press residue product includes a number of interesting active substances. The most significant substances are from the group polyphenoles, especially from subgroups thereof, such as anthocyanins and oligomeric procyanidins.

If necessary, the press residue product can be further concentrated by a portion of the water contained in the product being removed. This removal of water can be carried out by a filtration, an extraction, a centrifugation and by other conventional methods.

In many cases it is ordinary to use the primary press residue for extracting various fermenting products, usually technical alcohol, citric acid, tartaric acid and the like products. Before the fermenting, a fraction of grape seeds is usually separated off. This fermenting process also results in a residue, viz. the secondary press residue, which can be used as the feed additive or as a part thereof used according to the invention. In the secondary press residue, the high content of easily metabolizable energy has been used by the fermenting process while the concentration of the active substances relevant to the invention has been increased.

Finally, the concentration of the active substances relevant to the feed additive used according to the invention is further increased by other products irrelevant to the feed additive used according to the invention being removed by conventional extraction methods, said other products being in form of grape seed oil and natural colorants, such as enocyanin which has been produced commercially for more than 100 years (Mazza, G. (1995):" Anthocyanins in Grapes and Grape Products". *Critical Reviews in Food Science and Nutrition,* vol 35(4): p. 341-371) from the waste product resulting from the production of alcohol, viz. a secondary press residue. Subsequently, the remaining active substances relevant to the feed additive used according to the invention are found in a particularly high concentration in the remaining press residue product, viz. a "tertiary press residue".

The above press residues include inter alia oligomer procyanidins, which inter alia have the following advantageous effects:
* they are astringent
* they are antibacterial
* they protect fat-soluble vitamins, such as vitamin E and other tocopheroles, as well as vitamin K
* they protect carotenoides, such as betacarotene, luteine, luteoxanthine, astaxanthine, cantaxanthine, capsanthine, zeaxanthine and lycopene
* they protect some important amino acids against oxidative and bacterial decomposition
* they strengthen the epithelial cells in the digestive tract
* they prevent diseases.

Anthocyanins are also included in the press residues and have several effects too, including
* they are antibacterial
* they counteract a deficiency of vitamin E and vitamin K
* they are antioxidative
* they increase the bioavailability of microminerals.

Citric acid and tartaric acid can together with anthocyanins act as a synergist to the above effects.

The additive can very beneficially be used for both single-masted farm animals and for ruminants and fish as well as for pets.

### Formulation of commercial products including the feed additive

In response to the concentration and the variation of the active substances in the raw material, it can be necessary to mix said raw material including the substances relevant to the feed additive used according to the invention with a suitable carrier in such a manner that a final product is obtained which is both reasonably standardized and not too concentrated. The resulting final product must be such that it can be directly mixed in the animal feed both by the producers of ready-made animal feed and by the farmers.

In order to obtain these properties of the commercial feed additive, the suitable carriers are primarily mineral carriers in form of clay minerals and zeolites, in particular sepiolite and klinoptilolite, and secondarily vegetable carriers, such as wheat flour, wheat bran, soy mill feed (hulls) etc. Calcium carbonate can also be a usable carrier, not so much due to its technical properties, but due to its low price. The same applies to grape seed flour which is a known carrier frequently used in animal feed.

The press residue product can be more or less ground before it is mixed with the present carrier.

The feed additive turned out to have a significant effect on
* the animal feed consumption, the daily growth and the utilization of the animal feed of the farm animals
* the utilization of nitrogen

The causes of the effects in question have not been completely clarified as more causes beyond the hitherto determined causes may apply. The causes already confirmed include the following:
The additive
* improves the tastabily of the animal feed
* reduces the occurrence of diarrhoea among the animals due to at least two different active modes
* improves the immune response of the animals also due to at least two different active modes
* improves the degree of utilization of vitamins, important amino acids, such as lysine, threonine, methionine, isoleucine and arginine
* improves the utilization of nitrogen generally speaking.

In addition, the additive has an indirect antibacterial effect which can be due to its prebiotic properties, but it can also be due to the fact that it can reduce the possibility of penetration of pathogenic micro-organisms and viruses through epithelial cells in the digestive tract.

### Examples

The present Examples use the following press residue products resulting from the production of wine:
Press residue A: A press residue product obtained immediately after the pressing out of grape juice, viz. a primary press residue.
Press residue B: A press residue product obtained from a primary press residue which has been used for the production of alcohol, viz. a secondary press residue.
Press residue C: A press residue product based on a secondary press residue after the extraction of colorants etc. to be used for instance in supplementary nutrients, health food or as natural colorants, viz. a tertiary press residue.

The indicated quantities of additives relative to the quantity of animal feed are based on dry fodder with an ordinary water content.

In order to verify the additive, a number of tests have been carried out at Danish and foreign farms. Some representative test results are found in the Examples 1 to 3.

### Example 1.

### Test at "Horstedgaard", 10 days test during the period 14 to 24 August 2002

Piglets from the weaning at the age of 24 days; 30 pigs in both the control group and in the test group.

Tested additive: *Cabanine T15 Powder,* in an amount of 2 kg per ton of animal feed consisting of 300 gram of Press residue C plus 1700 gram of Sepiolite 100.

Results:
Daily consumption of animal feed increased by 14.5%
Daily growth improved by 8.1%
Utilization of the animal feed reduced by 5.9%

### Example 2.

### Test at "Horstedgaard", 10 days test during the period 25 September to 5 October 2002

Piglets from the weaning at the age of 24 days; 30 pigs in both the control group and in the test group.

Additive: *Cabanine T35 Powder,* in an amount of 2 kg per ton of animal feed consisting of 700 gram of Press residue C plus 1300 gram of Sepiolite 100.
Results:
Daily consumption of animal feed reduced by 16.7%
Daily growth unchanged
Utilization of the animal feed improved by 16.7%

### Example 3.

### Test at "Strandgård", 10 days test during the period 27 February to 9 March 2002

Porkers from the day of arrival at the farm where the growing takes place, 23 pigs in both the control group and in the test group.

Additive: *Cabanine V50 Powder,* In the amount of 3 kg per ton of animal feed consisting of 1500 gram of Press residue B and 1500 gram of Sepiolite 100.

Results:
Daily consumption of animal feed increased by 2.8%
Daily growth increased by 5.2%
Utilization of the animal feed improved by 2.1 %

### Examples 4 to 9

The following additives are to be mixed in the animal feed in an amount of 2 kg per ton of animal feed:
- Example 4:: 750 gram of Press residue A
250 gram of Sepiolite
- Example 5:: 1,750 gram of Press residue A
200 gram of Klinoptilolite
50 gram of Danish, non-GMO rape oil as antidusting agent
- Example 6:: 500 gram of Press residue B
500 gram of Klinoptilolite
- Example 7:: 1,500 gram of Press residue B
430 gram of wheat flour
70 gram of propylene glycol as antidusting agent
- Example 8:: 250 gram of Press residue C
750 gram of CaCO₃
- Example 9:: 1,250 gram of Press residue C
710 gram of wheat middlings
40 gram of soy oil as antidusting agent

### Examples 10 to 13

The following additives are to be mixed in the animal feed in an amount of 1 kg per ton of animal feed:
- Example 10:: 1000 gram of Press residue B
- Example 11:: 1,900 gram of Press residue B
50 gram of Sepiolite as anti-lumping agent
50 gram of propylene glycol as antidusting agent
- Example 12:: 500 gram of Press residue C
500 gram of Sepiolite
- Example 13:: 1,500 gram of Press residue C
450 gram of Klinoptilolite
50 gram of rape oil

Depending on the concentration of the active substances in the press residue used, the optimum admixing into the animal feed can vary widely, such as from 50 to 5000 gram, in some cases maybe even up to 10000 gram of press residue per ton of animal feed.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. Use of a plant material originating from grapes in an intestinally active feed additive to be added to the animal feed or the drinking water for animals, where the feed additive in addition to possible conventional adjuvants or additives includes 50 to 10,000 g of the plant material calculated as dry matter per 1,000 kg of animal feed.

2. Use according to claim 1, **characterised in that** the amount of feed additive to be used for 1000 kg of animal feed includes 50 to 5000 g of the plant material calculated as dry matter.

3. Use according to claim 2, **characterised in that** the amount of feed additive to be used for 1000 kg of animal feed includes 250 to 1900 g of the plant material calculated as dry matter.

4. Use according to any of the preceding claims, **characterised in that** the plant material includes the primary press residue obtainable by pressing grape juice out of grapes.

5. Use according to any of the preceding claims, **characterised in that** the plant material includes a secondary press residue obtainable as a residue resulting from fermentation of the primary press residue defined in claim 4 or from a seed-free fraction of the primary press residue.

6. Use according to any of the preceding claims, **characterised in that** the plant material includes a tertiary press residue obtainable from a secondary press residue as stated in claim 5 upon removal of one or more constituents through extraction.

7. Use according to any of the preceding claims, **characterised in that** the plant material includes a combination of two or more press residues as stated in claims 4 to 6.

8. Use according to any of the claims 4 to 7, **characterised in that** the feed additive further includes up to 5% by weight of an organic acid acceptable in the animal feed relative to the press residue or press residues calculated as dry matter.

9. Use according to any of the claims 4 to 7, **characterised in that** the feed additive further includes up to 30% by weight of a salt acceptable in the animal feed relative to the press residue or the press residues calculated as dry matter.

10. Use according to any of the preceding claims, **characterised in that** the feed additive further includes a carrier acceptable in the animal feed.

11. Use according to any of the preceding claims for stabilising and/or regenerating fat-soluble vitamins and/or provitamins in vivo and/or in vitro.

12. Use according to any of the preceding claims, where the additive is added to a conventional feed mixture for farm animals.

13. Use according to any of the preceding claims in connection with breeding of farm animals.
